# EUROPEAN PATENT APPLICATION

(11) **EP 2 889 275 A1**
(43) Date of publication of application: **01.07.2015**
(21) Application number: 13834087.2
(22) Date of filing: 23.08.2013
(51) Int. Cl.: C03B 37/10, C03C 3/06, G02B 6/00

(54) **METHOD FOR PRODUCING DEUTERIUM-TREATED OPTICAL FIBER, AND DEUTERIUM-TREATED OPTICAL FIBER**

(30) Priority: 27.08.2012 JP 2012186677
(71) Applicant: Sumitomo Electric Industries, Ltd., Chuo-ku Osaka-shi Osaka 541-0041 (JP)
(72) Inventor: HARUNA, Tetsuya, Yokohama-shi Kanagawa 244-8588 (JP); HIRANO, Masaaki, Yokohama-shi Kanagawa 244-8588 (JP); TAMURA, Yoshiaki, Yokohama-shi Kanagawa 244-8588 (JP)
(74) Representative: Hoffmann Eitle
(86) International application number: PCT/JP2013/072534
(87) International publication number: WO 2014/034552

(57) **Abstract**

An alkali-metal-doped core optical fiber having high hydrogen resistance and a method for manufacturing such an optical fiber are provided. A method for manufacturing a deuterium-treated optical fiber according to the present invention includes a preform-forming step of forming a silica glass optical fiber preform having a core doped with an alkali metal element, a drawing step of drawing the optical fiber preform to form an optical fiber, and an exposing step of exposing the optical fiber to a deuterium gas atmosphere. Alkali-metal-doped core optical fibers can be manufactured by using this method. In the exposing step, the optical fiber is exposed to an atmosphere containing deuterium gas at a temperature of 20°C or more under conditions where (deuterium gas partial pressure) × (exposure time) is 50 kPa·hour or more.

## Description

### Technical Field

The present invention relates to a method for manufacturing a deuterium-treated optical fiber and a deuterium-treated optical fiber.

### Background Art

In the present specification, optical fibers (for example, optical fibers according to the ITU-T G.652 standard) that include a silica glass core containing GeO₂ are referred to as "GeO₂-doped core optical fibers". GeO₂ is a dopant for increasing the refractive index. Optical fibers that include a core composed substantially of pure silica glass and containing no dopant (such as GeO₂ or Al₂O₃) for increasing the refractive index are referred to as "pure silica core optical fibers". Pure silica core optical fibers have smaller attenuation than GeO₂-dope core optical fibers and have high long-term reliability with respect to hydrogen resistance and radiation resistance (see Non Patent Literature 1). In order to improve their hydrogen resistance, GeO₂-doped core optical fibers are sometimes exposed to deuterium gas (D₂) under certain conditions (see Patent Literature 1). In contrast, pure silica core optical fibers have high hydrogen resistance and generally do not need to be exposed to deuterium gas.

There are optical fibers that include a silica glass core containing a minute amount (500 ppm or less) of alkali metal element (for example, sodium (Na) or potassium (K)) and no dopant for increasing the refractive index (Patent Literatures 2 to 10). Hereinafter the optical fibers are referred to as "alkali-metal-doped core optical fibers". Doping an alkali metal element into a core part of an optical fiber preform can reduce the viscosity of the core part and promotes the relaxation of a network structure of the silica glass in the drawing of the optical fiber preform. Thus, it is believed that doping an alkali metal element into a core part can reduce attenuation in optical fibers. Cores of such alkali-metal-doped core optical fibers include a very small amount of halogen, such as Cl and F as well as the alkali metal.

### Summary of Invention

### Technical Problem

It is an object of the present invention to provide an alkali-metal-doped core optical fiber having high hydrogen resistance and a method for manufacturing such an optical fiber.

### Solution to Problem

In order to solve the problems, there is provided a method for manufacturing a deuterium-treated optical fiber, which includes (1) drawing an optical fiber preform to form a silica glass optical fiber that includes a core region and a cladding region surrounding the core region, the core region containing an alkali metal element, the average concentration of the alkali metal element being 0.5 atomic ppm or more, and (2) exposing the optical fiber to an atmosphere containing deuterium gas at a temperature of 20°C or more under conditions where (deuterium gas partial pressure) X (exposure time) is 50 kPa·hour or more.

In a method for manufacturing a deuterium-treated optical fiber according to the present invention, the deuterium gas partial pressure may be 5 kPa or less, the temperature may be 80°C or less, and the exposure time may be 200 hours or less.

In accordance with a second aspect of the present invention, there is provided a deuterium-treated silica glass optical fiber that includes a core region containing an alkali metal element, the average concentration of the alkali metal element being 0.5 atomic ppm or more, and a cladding region surrounding the core region. The deuterium-treated optical fiber was exposed to an atmosphere containing deuterium gas at a temperature of 20°C or more under conditions where (deuterium gas partial pressure) X (exposure time) is 50 kPa·hour or more. Exposure of the deuterium-treated optical fiber to an atmosphere containing hydrogen gas having a partial pressure of 1 kPa for 720 hours at a temperature of 25°C (hereinafter referred to as an evaluation condition) increases an attenuation at a wavelength of 1550 nm by 0.003 dB/km or less.

In a core region of a deuterium-treated optical fiber according to the present invention, the average concentration of chlorine may be 1,000 atomic ppm or more, the maximum concentration of fluorine may be 200 atomic ppm or more, the concentration of transition metal elements and typical metal elements may be less than 0.5 atomic ppm, the alkali metal element may be potassium, and the average concentration of the alkali metal element may be 100 atomic ppm or less. The deuterium-treated optical fiber may have an attenuation of 0.180 dB/km or less at a wavelength of 1550 nm.

In a deuterium-treated optical fiber according to the present invention, the evaluation condition may increase an attenuation at a wavelength in the range of 1530 to 1570 nm by 0.003 dB/km or less, the evaluation condition may increase an attenuation at a wavelength in the range of 1560 to 1620 nm by 0.003 dB/km or less, the evaluation condition may increase an attenuation at a wavelength of 1380 nm by 0.01 dB/km or less, and exposure of the deuterium-treated optical fiber to an atmosphere containing hydrogen gas having a partial pressure of 101 kPa for 20 hours at a temperature of 80°C may increase an attenuation at a wavelength of 1380 nm by 0.2 dB/km or less.

A deuterium-treated silica glass optical fiber according to the present invention includes a core region containing an alkali metal element, the average concentration of the alkali metal element being in the range of 0.5 to 100 atomic ppm, and a cladding region surrounding the core region, wherein the average concentration of chlorine in the core region may be 1,000 atomic ppm or more, the concentration of transition metal elements and typical metal elements in the core region may be less than 0.5 atomic ppm, the deuterium-treated optical fiber may have been exposed for 20 to 200 hours at a temperature in the range of 40°C to 80°C to an atmosphere containing deuterium gas having a partial pressure in the range of 1 to 5 kPa, the deuterium-treated optical fiber may have an attenuation of 0.180 dB/km or less at a wavelength of 1550 nm, and exposure of the deuterium-treated optical fiber for 720 hours at a temperature of 25°C to an atmosphere containing hydrogen gas having a partial pressure of 1 kPa may increase an attenuation at a wavelength of 1550 nm by 0.003 dB/km or less.

### Advantageous Effects of Invention

In accordance with the present invention, alkali-metal-doped core optical fibers having high hydrogen resistance can be manufactured.

### Brief Description of Drawings

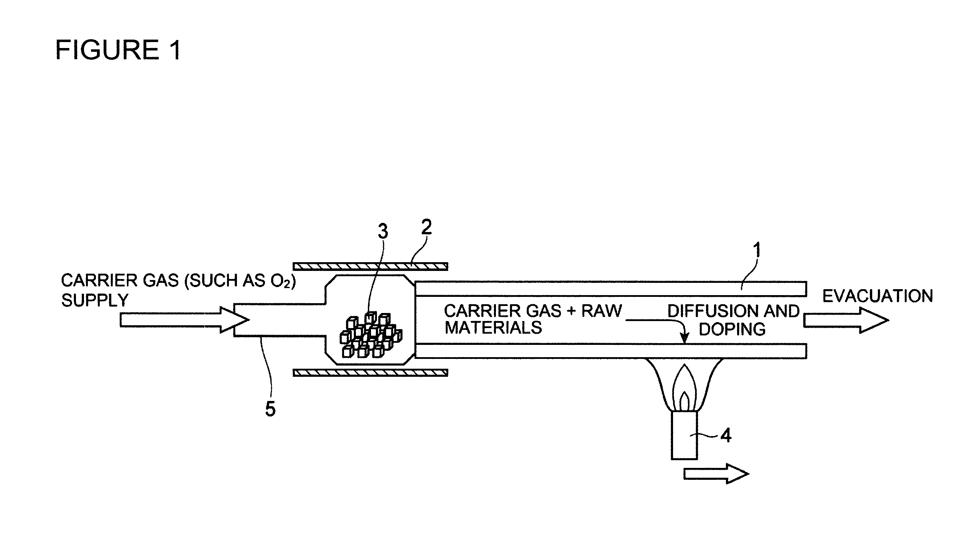

Figure 1 is a schematic view illustrating a thermal diffusion step.

### Description of Embodiments

Embodiments of the present invention will be described below with reference to the accompanying drawings. The drawings are for the purpose of illustration and are not intended to limit the scope of the present invention. To avoid repetition, identical reference numerals designate like parts throughout the drawings. The dimensional ratios in the drawings are not necessarily exact.

The hydrogen resistance indicates stability of attenuation of optical fibers caused by hydrogen molecules and represents one of the long-term reliability items of the optical fibers. Hydrogen gas generated from a coating material around a glass portion of optical fibers or from metals in optical fibers sometimes gradually permeates the glass portion over a long period of several years or more after the optical fibers are laid. Hydrogen gas may cause reactions and form OH groups and defect centers in the glass, and thereby increase attenuation. An attenuation increase of manufactured optical fibers due to reactions with hydrogen in an operating environment in their service lives can be estimated by examining the dependency of hydrogen reactivity in the optical fibers on temperature, hydrogen partial pressure, and time respectively in an accelerated test.

In alkali-metal-doped core optical fibers, since an alkali metal element has relatively high mobility in a silica glass network composed mainly of SiO₂, the silica glass network is liable to be destroyed, and defect centers, such as non-bridging oxygen centers, are often formed. Thus, alkali-metal-doped core optical fibers may have lower hydrogen resistance than pure silica core optical fibers.

The present inventor also found that alkali-metal-doped core optical fibers have another attenuation that increases gradually from a wavelength band of 1500 nm to a longer wavelength. Thus, alkali-metal-doped core optical fibers have a problem of possible degradation of hydrogen resistance, which is one of the long-term reliability items.

A method for manufacturing a deuterium-treated optical fiber according to an embodiment of the present invention includes a preform-forming step, a drawing step, and an exposing step. Alkali-metal-doped core optical fibers can be manufactured by using this method. The preform-forming step includes a sequence of a drying step, a thermal diffusion step, a diameter reduction step, an etching step, and a collapsing step. A silica glass optical fiber preform having a core doped with an alkali metal element is formed in the preform-forming step. In the drawing step, the optical fiber preform is drawn to form an optical fiber. In the exposing step, the optical fiber is exposed to a deuterium gas atmosphere.

Figure 1 is a schematic view illustrating a thermal diffusion step. A silica glass pipe 1 contains 100 atomic ppm of Cl and 6,000 atomic ppm of fluorine. The concentrations of the other dopants are below the minimum limit of detection (approximately 1 ppm). The silica glass pipe 1 has an outer diameter of 32 mm and an inner diameter of 15 mm. One end of the glass pipe 1 is joined to a handling glass pipe 5. A portion of the handling glass pipe 5 is used as a raw material reservoir. An alkali metal salt raw material (KBr) 3 is prepared in the raw material reservoir. A portion of the glass pipe 1 may be used as a raw material reservoir.

In the drying step before the thermal diffusion step, while 3 SLM (3 liter/min under standard conditions) of dry nitrogen (dew point: -76°C or less) is introduced into the raw material reservoir as a carrier gas, the exterior of the raw material reservoir is heated to a temperature of 500°C with an external heat source (electric furnace) 2. This state is held for 30 minutes to dry the alkali metal salt raw material 3 in the raw material reservoir. The external temperature of the raw material reservoir in the drying step is 270°C or more and is lower than the melting point of the alkali metal salt raw material, preferably 550°C or less.

In the thermal diffusion step, the temperature of the raw material reservoir is adjusted to be 860°C. While 1 SLM of dry oxygen is introduced into the raw material reservoir and the glass pipe 1 as a carrier gas, the outer surface of the glass pipe 1 is heated to a temperature of 2000°C with an external heat source (oxyhydrogen burner) 4. The oxyhydrogen burner is moved 15 times at 30 mm/min to diffuse potassium and to dope an inner surface of the glass pipe with potassium. Furthermore, while the glass pipe 1 is heated with the oxyhydrogen burner 4, the inner diameter is reduced to approximately 4 mm (diameter reduction step).

After the diameter reduction step, while SF₆ and Cl₂ are supplied to the glass pipe 1 from a gas-supply unit, the glass pipe 1 is heated to a temperature of 2000°C with the oxyhydrogen burner 4 (etching step). Thus, the inner surface of the glass pipe 1 is vapor-phase-etched to an inner diameter of approximately 5 mm.

After the etching step, while the glass pipe 1 is evacuated to an absolute internal pressure of approximately 100 kPa, the glass pipe 1 is heated to a temperature of approximately 1400°C with the oxyhydrogen burner 4 (collapsing step). Thus, the glass pipe 1 is collapsed and forms an alkali-metal-doped glass rod having an outer diameter of approximately 25 mm.

After the collapsing step, the surface of the glass rod is ground enough to remove the OH groups (more specifically, the outer diameter is decreased to approximately 70% or less of the outer diameter of the collapsed glass rod), thereby forming a first core. The first core is then covered with a second core. The second core has a diameter approximately three times the diameter of the first core. The second core is formed of silica glass doped with 6,000 ppm in average of Cl and 1 ppm or less of other dopants.

The first core and the second core constitute a core part. Silica glass doped with a fluorine element is synthesized on the outside of the core part. The silica glass forms a first cladding part. The relative refractive index difference between the second core and the first cladding part ((the refractive index of the second core) - (the refractive index of the first cladding part)) / (the refractive index of the second core) is up to approximately 0.33%. Silica glass doped with a fluorine element is then synthesized as a second cladding part on the first cladding part. The relative refractive index difference between the second core and the second cladding part ((the refractive index of the second core) - (the refractive index of the second cladding part)) / (the refractive index of the second core) is approximately 0.23%. An optical fiber preform is thus completed.

The core of the optical fiber preform contains 1000 atomic ppm or more in average of each of the alkali metal and chlorine and is preferably substantially free from Ge, Al, and P, and transition metals, such as Fe, Ni, and Cu. The concentration of Ge, Al, and P, and transition metals is 0.5 atomic ppm or less. The core of the optical fiber preform may contain fluorine atoms. The maximum concentration of fluorine in the core is preferably 200 atomic ppm or less. This allows the optical fiber to have an attenuation of 0.18 dB/km or less.

In this case, it is desirable that the cladding part of the optical fiber preform be formed of silica glass doped with fluorine and have a lower refractive index than the core part. The peak concentration of an alkali metal element in the core of the optical fiber preform is preferably 500 atomic ppm or more. An optical fiber manufactured by drawing the optical fiber preform can have an attenuation of 0.17 dB/km at a wavelength of 1550 nm.

In the drawing step, the optical fiber preform is drawn to form an optical fiber. The optical fiber includes a core region and a cladding region surrounding the core region. The core region contains 0.5 atomic ppm or more of an alkali metal (potassium) element on average. The optical fiber has a low attenuation of 0.180 dB/km or less, 0.170 dB/km or less, or 0.160 dB/km or less, at a wavelength of 1550 nm. Table I shows the characteristics of the optical fiber. Such an optical fiber is suitable for long-haul optical transmission system.

**[Table I]**

| Items | Measurement conditions | Units | Characteristics values | |
|---|---|---|---|---|
| | | | Range | Preferred range |
| Concentration of potassium | Average in core | atomic ppm | | 0.5 ~ 100 |
| Attenuation | @1300 nm | dB/km | | 0.285 ~ 0.300 |
| Attenuation | @1380 nm | dB/km | 0.8 or less | 0.4 or less, 0.3 or less |
| Attenuation | @1550 nm | dB/km | 0.180 | 0.155 ~ 0.165 |
| Chromatic dispersion | @1550 nm | ps/nm/km | +15 ~ +22 | +20.0 ~ +21.5 |
| Zero-dispersion wavelength | | nm | 1250 ~ 1350 | |
| Dispersion slope | @1550nm | ps/nm²/km | +0.05 ~ +0.07 | +0.055 ~ +0.065 |
| Effective area | @1550 nm | µm² | 70 ~ 160 | 125 ~ 145 |
| Mode field diameter | @1550 nm | µm | | 12 ~ 14 |
| Fiber cut-off wavelength | 2 m optical fiber | nm | | 1400 ~ 1600 |
| Cable cut-off wavelength | 22 m optical fiber | nm | 1530 or more | 1300 ~ 1500 |
| Polarization mode dispersion | C, L band | ps /√km | 0.2 or less | 0.001 ~ 0.15 |
| Nonlinear refractive index | @1550 nm, Random polarization state | m²/W | | 2.1 ~ 2.2×10^{- 20} |
| Nonlinear coefficient | @1550 nm. Random polarization state | (W·km)⁻¹ | | 0.6 ~ 0.7 |

The cable cut-off wavelength is preferably 1530 nm or less, more preferably 1450 nm or less, which is the pump wavelength in Raman amplification, and may be 1260 nm or less as in standard single-mode fibers. The core part has a diameter in the range of approximately 5 to 15 µm. The relative refractive index difference between the core part and the cladding part ((the refractive index of the core part) - (the refractive index of the cladding part)) / (the refractive index of the core part) ranges from approximately 0.1% to 0.7%. The glass portion of the optical fiber may have an outer diameter in the range of approximately 110 to 150 µm. The optical fiber covered with a resin preferably has an outer diameter in the range of approximately 200 to 300 µm.

In the exposing step, the optical fiber is exposed to a deuterium gas atmosphere. The conditions in the exposing step include an atmosphere containing deuterium gas at a temperature of 20°C or more and (deuterium gas partial pressure) × (exposure time) of 50 kPa·hour or more. The exposing step may be divided into two or more steps, and (deuterium gas partial pressure) × (exposure time) is 50 kPa·hour or more in total. More preferred conditions are the deuterium gas partial pressure of 5 kPa or less, the temperature of 80°C or less, or the exposure time of 200 hours or less. When the optical fiber subjected to the exposing step is exposed to an atmosphere containing hydrogen gas having a partial pressure of 1 kPa for 720 hours at a temperature of 25°C, the attenuation of the optical fiber at a wavelength of 1550 nm is increased by 0.003 dB/km or less. In this manner, an alkali-metal-doped core optical fiber having high hydrogen resistance can be manufactured.

An attenuation increase by exposing an optical fiber to an atmosphere containing hydrogen gas having a partial pressure of 1 kPa for 720 hours (30 days) at a temperature of 25°C is hereinafter simply referred to as an " attenuation increase ". The results of experiments for measuring the attenuation increase of an optical fiber having a core containing potassium as an alkali metal element are described below with respect to the presence or absence of the exposing step, the deuterium gas partial pressure in the exposing step, the treatment temperature in the exposing step, and the treatment time in the exposing step.

The following are the procedures and results of the measurement of the attenuation increase of an optical fiber with respect to the presence or absence of the exposing step.
(1) Two optical fibers having a core containing 2 atomic ppm of potassium and having a length of 7 km were prepared.
(2) One of the optical fibers was subjected to the exposing step for 96 hours at a deuterium gas partial pressure of 2 kPa and at a treatment temperature of 40°C and was then placed in the air at room temperature for 2 weeks or more in order to remove deuterium that did not react with glass and remained as molecules in the glass. The other of the optical fibers was not subjected to the exposing step.
(3) The attenuation (initial attenuation) of each of the two optical fibers was measured.
(4) The two optical fibers were exposed to an atmosphere containing hydrogen gas having a partial pressure of 1 kPa for 720 hours (30 days) at a temperature of 25°C and were then placed in the air at room temperature for 2 weeks or more in order to remove hydrogen that did not react with the glass and remained as molecules in the glass.
(5) The attenuation (attenuation after hydrogen treatment) of each of the two optical fibers was measured.
(6) The attenuation increase of each of the two optical fibers was evaluated by subtracting the initial attenuation from the attenuation after hydrogen treatment.

Table II summarizes the measurements of the attenuation increase of the optical fibers with respect to the presence or absence of the exposing step. Table II lists the attenuation increase at a wavelength of 1550 nm, the maximum attenuation increase at a wavelength in the range of 1530 to 1570 nm, the maximum attenuation increase at a wavelength in the range of 1560 to 1620 nm, and the attenuation increase at a wavelength of 1380 nm. The optical fiber subjected to the exposing step had smaller increases in attenuation at all the wavelengths than the optical fiber not subjected to the exposing step.

**[Table II]**

| Wavelength [nm] | With exposing step Attenuation increase [dB/km] | Without exposing step Attenuation increase [dB/km] |
|---|---|---|
| 1550 | 0.002 | 0.003 |
| 1530 to 1570 | 0.003 (max.) | 0.005 (max.) |
| 1560 to 1620 | 0.003 (max.) | 0.007 (max.) |
| 1380 | 0.01 | 0.015 |

The following are the method and results of the measurement of the attenuation increase of an optical fiber with respect to the deuterium gas partial pressure in the exposing step.
(1) Five optical fibers having a core containing 0.5 atomic ppm of potassium and having a length of 7 km were prepared.
(2) The five optical fibers were subjected to the exposing step. The deuterium gas partial pressure in the exposing step was 1, 2, 4, 6, or 10 kPa. The treatment temperature in the exposing step was 40°C. The treatment time in the exposing step was 96 hours. After the exposing step, the five optical fibers were placed in the air at room temperature for 2 weeks or more in order to remove deuterium that did not react with glass and remained as molecules in the glass.
(3) The attenuation (initial attenuation) of each of the five optical fibers was measured.
(4) The five optical fibers were exposed to an atmosphere containing hydrogen gas having a partial pressure of 1 kPa for 720 hours (30 days) at a temperature of 25°C and were then placed in the air at room temperature for 2 weeks or more in order to remove hydrogen that did not react with the glass and remained as molecules in the glass.
(5) The attenuation (attenuation after hydrogen treatment) of each of the five optical fibers was measured.
(6) The attenuation increase of each of the five optical fibers was evaluated by subtracting the initial attenuation from the attenuation after hydrogen treatment.

Table III summarizes the measurements of the attenuation increase of the optical fibers with respect to the deuterium gas partial pressure in the exposing step. Table III shows that the attenuation increase can be sufficiently suppressed when the deuterium gas partial pressure is 2 kPa or more. Since the lower explosion limit of deuterium gas is 5 kPa, the deuterium gas partial pressure is preferably 5 kPa or less from this standpoint.

**[Table III]**

| D₂ partial pressure [kPa] | Attenuation increase at wavelength of 1550 nm [dB/km] |
|---|---|
| 1 | 0.0025 |
| 2 | 0.0015 |
| 4 | 0.0014 |
| 6 | 0.0015 |
| 10 | 0.0012 |

The following are the method and results of the measurement of the attenuation increase of an optical fiber with respect to the treatment temperature in the exposing step.
(1) Five optical fibers having a core containing 20 atomic ppm of potassium and having a length of 7 km were prepared.
(2) The five optical fibers were subjected to the exposing step. The deuterium gas partial pressure in the exposing step was 2 kPa. The treatment temperature in the exposing step was 10°C, 20°C, 40°C, 60°C, or 80°C. The treatment time in the exposing step was 96 hours. After the exposing step, the five optical fibers were placed in the air at room temperature for 2 weeks or more in order to remove deuterium that did not react with glass and remained as molecules in the glass.
(3) The attenuation (initial attenuation) of each of the five optical fibers was measured.
(4) The five optical fibers were exposed to an atmosphere containing hydrogen gas having a partial pressure of 1 kPa for 720 hours (30 days) at a temperature of 25°C and were then placed in the air at room temperature for 2 weeks or more in order to remove hydrogen that did not react with the glass and remained as molecules in the glass.
(5) The attenuation (attenuation after hydrogen treatment) of each of the five optical fibers was measured.
(6) The attenuation increase of each of the five optical fibers was evaluated by subtracting the initial attenuation from the attenuation after hydrogen treatment.

Table IV summarizes the measurements of the attenuation increase of the optical fibers with respect to the treatment temperature in the exposing step. Table IV shows that the attenuation increase can be sufficiently suppressed when the treatment temperature is 20°C or more (preferably 40°C or more). When the treatment temperature is increased to 80°C, the coating of the optical fibers may be degraded, and the bending loss of the optical fibers may deteriorate. From this standpoint, the treatment temperature is preferably 80°C or less.

**[Table IV]**

| D₂ treatment temperature [°C] | Attenuation increase at wavelength of 1550 nm [dB/km] |
|---|---|
| 10 | 0.0030 |
| 20 | 0.0025 |
| 40 | 0.0015 |
| 60 | 0.0020 |
| 80 | 0.0010 |

The following are the method and results of the measurement of the attenuation increase of an optical fiber with respect to the treatment time in the exposing step.
(1) Six optical fibers having a core containing 5 atomic ppm of potassium and 7 having a length of km in length were prepared.
(2) The six optical fibers were subjected to the exposing step. The deuterium gas partial pressure in the exposing step was 2 kPa. The treatment temperature in the exposing step was 40°C. The treatment time in the exposing step was 12, 24, 48, 72, 96, or 120 hours. After the exposing step, the six optical fibers were placed in the air at room temperature for 2 weeks or more in order to remove deuterium that did not react with glass and remained as molecules in the glass.
(3) The attenuation (initial attenuation) of each of the six optical fibers was measured.
(4) The six optical fibers were exposed to an atmosphere containing hydrogen gas having a partial pressure of 1 kPa for 720 hours (30 days) at a temperature of 25°C and were then placed in the air at room temperature for 2 weeks or more in order to remove hydrogen that did not react with the glass and remained as molecules in the glass.
(5) The attenuation (attenuation after hydrogen treatment) of each of the six optical fibers was measured.
(6) The attenuation increase of each of the six optical fibers was evaluated by subtracting the initial attenuation from the attenuation after hydrogen treatment.

Table V summarizes the measurements of the attenuation increase of the optical fibers with respect to the treatment time in the exposing step. Table V shows that the attenuation increase can be sufficiently suppressed when the treatment time is 24 hours or more (preferably 72 hours or more). Since many hours of the exposing step reduces the productivity of optical fibers, the treatment time is preferably 200 hours or less.

**[Table V]**

| D2 treatment time [h] | Attenuation increase at wavelength of 1550 nm [dB/km] |
|---|---|
| 12 | 0.0026 |
| 24 | 0.0020 |
| 48 | 0.0023 |
| 72 | 0.0019 |
| 96 | 0.0015 |
| 120 | 0.0010 |

### Industrial Applicability

An optical fiber according to the present invention is suitable for a submarine cable.

### Citation List

### Patent Literature

PTL 1: Japanese Unexamined Patent Application Publication No. 2003-261351
PTL 2: Japanese Unexamined Patent Application Publication (Translation of PCT Application) No. 2005-537210
PTL 3: U.S. Patent Application Publication No. 2006/0130530
PTL 4: Japanese Unexamined Patent Application Publication (Translation of PCT Application) No. 2007-504080
PTL 5: Japanese Unexamined Patent Application Publication (Translation of PCT Application) No. 2008-536190
PTL 6: Japanese Unexamined Patent Application Publication (Translation of PCT Application) No. 2010-501894
PTL 7: Japanese Unexamined Patent Application Publication (Translation of PCT Application) No. 2009-541796
PTL 8: Japanese Unexamined Patent Application Publication (Translation of PCT Application) No. 2010-526749
PTL 9: International Publication WO 98/002389
PTL 10: U.S. Patent No. 5146534

### Non Patent Literature

NPL 1: Y. Chigusa et al., J. LIGHTWAVE TECHNOL. 23, NO. 11 (2005): 3541-3550.
NPL 2: M. Kuwazuru et al., J. LIGHTWAVE TECHNOL. 6, NO. 2 (1988): 218-225.
NPL 3: K. Noguchi et al., J. LIGHTWAVE TECHNOL. 3, NO. 2 (1985): 236-243.

## Claims

1. A method for manufacturing a deuterium-treated optical fiber, comprising:
drawing an optical fiber preform to form a silica glass optical fiber that includes a core region and a cladding region surrounding the core region, the core region containing an alkali metal element, the average concentration of the alkali metal element being 0.5 atomic ppm or more; and
exposing the optical fiber to an atmosphere containing deuterium gas at a temperature of 20°C or more under conditions where (deuterium gas partial pressure) × (exposure time) is 50 kPa·hour or more.

2. The method for manufacturing a deuterium-treated optical fiber according to Claim 1, wherein
the deuterium gas partial pressure is 5 kPa or less.

3. The method for manufacturing a deuterium-treated optical fiber according to Claim 1 or 2, wherein the temperature is 80°C or less.

4. The method for manufacturing a deuterium-treated optical fiber according to any one of Claims 1 to 3, wherein
the exposure time is 200 hours or less.

5. A deuterium-treated silica glass optical fiber, comprising:
a core region containing an alkali metal element, the average concentration of the alkali metal element being 0.5 atomic ppm or more; and
a cladding region surrounding the core region,
wherein the deuterium-treated optical fiber was exposed to an atmosphere containing deuterium gas at a temperature of 20°C or more under conditions where (deuterium gas partial pressure) × (exposure time) is 50 kPa·hour or more, and
exposure of the deuterium-treated optical fiber to an atmosphere containing hydrogen gas having a partial pressure of 1 kPa for 720 hours at a temperature of 25°C increases an attenuation at a wavelength of 1550 nm by 0.003 dB/km or less.

6. The deuterium-treated optical fiber according to Claim 5, wherein
the average concentration of chlorine in the core region is 1,000 atomic ppm or more.

7. The deuterium-treated optical fiber according to Claim 5 or 6, wherein
the maximum concentration of fluorine in the core region is 200 atomic ppm or more.

8. The deuterium-treated optical fiber according to any one of Claims 5 to 7, wherein
the concentration of transition metal elements and typical metal elements in the core region is less than 0.5 atomic ppm.

9. The deuterium-treated optical fiber according to any one of Claims 5 to 8, wherein
the alkali metal element is potassium.

10. The deuterium-treated optical fiber according to any one of Claims 5 to 9, wherein
the attenuation at a wavelength of 1550 nm is 0.180 dB/km or less.

11. The deuterium-treated optical fiber according to any one of Claims 5 to 10, wherein
the average concentration of the alkali metal element is 100 atomic ppm or less.

12. The deuterium-treated optical fiber according to any one of Claims 5 to 11, wherein
exposure of the deuterium-treated optical fiber to an atmosphere containing hydrogen gas having a partial pressure of 1 kPa for 720 hours at a temperature of 25°C increases an attenuation at a wavelength in the range of 1530 to 1570 nm by 0.003 dB/km or less.

13. The deuterium-treated optical fiber according to any one of Claims 5 to 12, wherein
exposure of the deuterium-treated optical fiber to an atmosphere containing hydrogen gas having a partial pressure of 1 kPa for 720 hours at a temperature of 25°C increases an attenuation at a wavelength in the range of 1560 to 1620 nm by 0.003 dB/km or less.

14. The deuterium-treated optical fiber according to any one of Claims 5 to 13, wherein
exposure of the deuterium-treated optical fiber to an atmosphere containing hydrogen gas having a partial pressure of 1 kPa for 720 hours at a temperature of 25°C increases an attenuation at a wavelength of 1380 nm by 0.01 dB/km or less.

15. The deuterium-treated optical fiber according to any one of Claims 5 to 14, wherein
exposure of the deuterium-treated optical fiber to an atmosphere containing hydrogen gas having a partial pressure of 101 kPa for 20 hours at a temperature of 80°C increases an attenuation at a wavelength of 1380 nm by 0.2 dB/km or less.

16. A deuterium-treated silica glass optical fiber, comprising:
a core region containing an alkali metal element, the average concentration of the alkali metal element being in the range of 0.5 to 100 atomic ppm; and
a cladding region surrounding the core region,
wherein the average concentration of chlorine in the core region is 1,000 atomic ppm or more,
the concentration of transition metal elements and typical metal elements in the core region is less than 0.5 atomic ppm,
the deuterium-treated optical fiber was exposed to an atmosphere containing deuterium gas having a partial pressure in the range of 1 to 5 kPa for 20 to 200 hours at a temperature in the range of 40°C to 80°C,
the deuterium-treated optical fiber has an attenuation of 0.180 dB/km or less at a wavelength of 1550 nm, and
exposure of the deuterium-treated optical fiber to an atmosphere containing hydrogen gas having a partial pressure of 1 kPa for 720 hours at a temperature of 25°C increases an attenuation at a wavelength of 1550 nm by 0.003 dB/km or less.
